# EUROPEAN PATENT SPECIFICATION

(11) **EP 2 331 856 B1**
(45) Date of publication and mention of the grant of the patent: **04.05.2016**
(21) Application number: 09816527.7
(22) Date of filing: 23.09.2009
(51) Int. Cl.: F16J 15/46, D21C 9/06, D21C 9/18

(54) **SEALING ARRANGEMENT AND APPARATUS FOR TREATING CELLULOSE PULP**
VERSIEGELUNGSANORDNUNG UND VORRICHTUNG ZUR VERARBEITUNG VON ZELLULOSEPULPE
DISPOSITIF D ÉTANCHÉITÉ ET APPAREIL POUR TRAITER LA PÂTE DE CELLULOSE

(30) Priority: 24.09.2008 SE 0802027
(43) Date of publication of application: 15.06.2011
(73) Proprietor: Valmet Technologies, Inc., 02150 Espoo (FI)
(72) Inventor: LUNDBERG, Jörgen, S-856 43 Sundsvall (SE); PONTÉN, Fredrik, S-857 34 Sundsvall (SE); BYLANDER, Johan, S-852 37 Sundsvall (SE)
(74) Representative: Groth & Co. KB
(86) International application number: PCT/SE2009/051058
(87) International publication number: WO 2010/036193

(56) References cited:
- DE-U1- 20 110 950
- FR-A- 1 493 852
- FR-A- 1 493 852
- NL-A- 7 501 230
- US-A1- 2005 012 281
- US-B1- 6 306 259

## Description

### Technical Field

The present invention relates to an inflatable sealing arrangement for sealing between surfaces, which surfaces comprise a first surface and a second surface, which form an outer corner, and surfaces opposite said first and second surfaces. Further, the present invention relates to an apparatus member and to an apparatus each provided with such a sealing arrangement.

### Background of the Invention

When sealing gaps between surfaces, e.g. between the sealing surfaces of an apparatus member and opposite surfaces provided on the remaining apparatus, for sealing off a gap or any internal space from the atmosphere, it is previously known to use inflatable hollow seals in the form of elongated tubular elements made of an elastic polymeric material. The seal is attached to a first surface and is inflated by a fluid, e.g. pressurized air, to expand in an expansion direction and seal against an opposite second surface.

DE 201 10 950 discloses inflatable sealing arrangements in the form of elongated tubular elements made of an elastic polymeric material.

### The Object of the Invention

The prior art seals available today are not suitable for sealing a right angle outer corner against opposite surfaces. The reason for this is that upon inflation, the seal in the proximity region of the outer corner does not expand to the same extent in the expansion direction as the seal expands outside the proximity region of the outer corner. The result of this is that the seal will not properly seal against the opposite surfaces in the proximity region of the outer corner, which may result in a space between the seal and the opposite surface or in an insufficient abutment against the opposite surface, and an effective seal is consequently not attained.

In prior art, this problem has been solved by avoiding inflatable seals having right angle outer corners. Instead of allowing two surfaces to meet in a right angle outer corner, one solution is to provide a smoothly curved transition between surfaces which are transverse to each other, which curved transition is part-circular and has a relatively large radius, and thereby avoiding seals having right angle outer corners.

Another solution is to allow the inflatable seals of an apparatus member only to lie in one and the same plane, i.e. the surfaces of the apparatus member to be sealed against opposite surfaces must also lie in one and the same plane. Consequently, it is required that the opposite surfaces, against which the seals are to seal, also lie in one and the same plane.

The object of the present invention is thus to provide a seal which efficiently seals a right angle outer corner against opposite surfaces.

### Summary of the Invention

The above-mentioned object of the present invention is attained by providing a sealing arrangement as defined in the enclosed claim 1.

Hereby, an efficient seal between the top walls of each member and the opposite surfaces against which the top walls are sealing is also provided in the junction region, without any gap between the seal and the opposite surfaces. Thus, a seal which efficiently seals a right angle outer corner against opposite surfaces is provided. The space of each member is inflatable by a fluid which may be in the form of a gas, e.g. pressurized air, or a liquid.

According to an advantageous embodiment of the sealing arrangement according to the present invention, in the junction region, the walls of each member define a space, the cross-section of which is increased in the respective expansion direction in relation to the space of each member outside the junction region. Hereby, the side walls are longer in the junction region than outside the junction region, whereby upon inflation, the outer corner of the seal is allowed to move a longer distance in the diagonal direction from the resting position to the sealing position in relation to the distances between the resting position and the sealing position of respective top wall in respective expansion direction. Upon inflation, the outer corner of the seal will therefore move the same distances in the first expansion direction as the rest of the top wall of the first member, and the same distance in the second expansion direction as the rest of the top wall of the second member. The result of this is that an efficient seal between the top walls and the opposite surfaces is also provided in the junction region, without any gap between the seal and the opposite surfaces. A seal which efficiently seals a right angle outer corner against opposite surfaces is thus provided.

According to a further advantageous embodiment of the sealing arrangement according to the present invention, in the junction region, the walls of each member define a space which has an increased cross-section area perpendicular to the respective central axis in relation to the space of each member outside the junction region. Hereby, a further efficient seal between the top walls and the opposite surfaces is attained. Additionally, since both the cross-section area and the cross-section in the respective expansion direction of the space is increased in the junction region, the cross-section of the space in the direction transverse to each expansion direction in the junction region and outside the junction region can be the same, which is advantageous to limit the wear on the seal upon inflation and deflation, respectively.

According to another advantageous embodiment of the sealing arrangement according to the present invention, the elastic walls of each member comprise two side walls which together with the bottom wall and the top wall define the space of the member, and the thickness of the side walls in the junction region is decreased in relation to the side walls of each member outside the junction region. Hereby, upon inflation, the side walls are allowed to stretch a longer distance in the junction region in relation to the stretching distances of the side walls outside the junction region. The result is that the outer corner of the seal is allowed to move a longer distance in a diagonal direction from the resting position to the sealing position in relation to the distances between the resting position and the sealing position of respective top wall in respective expansion direction. Upon inflation, this provides for that, the outer corner of the seal moves the same distances in the first expansion direction as the rest of the top wall of the first member, and the same distance in the second expansion direction as the rest of the top wall of the second member, whereby a seal which efficiently seals a right angle outer corner against opposite surfaces is provided.

According to yet another advantageous embodiment of the sealing arrangement according to the present invention, the central axis of the first member is transverse to the central axis of the second member.

According to still another advantageous embodiment of the sealing arrangement according to the present invention, the top wall of the first member forms a substantially right angle with the top wall of the second member in the junction region, whereby a substantially right angle corner is formed by the top walls.

According to an advantageous embodiment of the sealing arrangement according to the present invention, the bottom walls of the two members form a smoothly curved wall in the junction region. Seals having edged corners at this position are subjected to more stress in relation to the seal having said smoothly curved wall in the junction region. Thus, the sealing arrangement according to this embodiment is subjected to less stress during operation when it is repeatedly inflated and deflated. The present invention allows this curved wall to have a much smaller radius in relation to prior art solutions.

According to a further advantageous embodiment of the sealing arrangement according to the present invention, the area of the outer surface of the top wall of the member is reduced in relation to the area of the outer surface of the opposite bottom wall. The reduced area of the outer surface of the top wall provides a higher pressure against the opposite surface upon inflation.

According to another advantageous embodiment of the sealing arrangement according to the present invention, the elastic walls are made of an elastic polymeric material.

Further, the present invention provides an apparatus member as defined in the enclosed claim 9.

According to an advantageous embodiment of the apparatus member according to the present invention, the surfaces of the apparatus member to be sealed against opposite surfaces are provided with a groove having a bottom surface which includes said first and second surfaces, and the groove is adapted to hold the members of the sealing arrangement.

According to a further advantageous embodiment of the apparatus member according to the present invention, the surfaces of the apparatus member to be sealed against opposite surfaces are peripheral surfaces of the apparatus member, and the sealing arrangement extends along the entire extension of the peripheral surfaces.

The present invention also provides an apparatus as defined in the appended claim 12.

According to an advantageous embodiment of the apparatus according to the present invention, peripheral surfaces are provided with a groove having a bottom surface which includes said first and second surfaces, and the groove is adapted to hold the members of the sealing arrangement.

According to a further advantageous embodiment of the apparatus according to the present invention, the sealing arrangement extends along the entire extension of the peripheral surfaces.

Further advantageous embodiments of the sealing arrangement, the apparatus member and the apparatus, respectively, according to the present invention, and further advantages of the present invention emerge from the detailed description of preferred embodiments.

### Brief Description of the Drawings

The present invention will now be described, for exemplary purposes, in more detail by way of embodiments and with reference to the enclosed drawings, in which:
- Fig. 1: is a schematic side view of an embodiment of the apparatus according to the present invention;
- Fig. 2: is a schematic top view of the of the vat segment of Fig. 1;
- Fig. 3: is a schematic perspective view of the first side casing member of the apparatus of Fig. 1 provided with an embodiment of the sealing arrangement according to the present invention;
- Fig. 4: is an enlargement of an outer corner of the first side casing member and the sealing arrangement of Fig. 3;
- Fig. 5: is a schematic cross-section side view of a portion of the sealing arrangement in the outer corner shown in Fig. 4;
- Fig. 6: shows the cross-section along A-A of Fig. 4;
- Fig. 7: shows the cross-section along B-B of Fig. 4;
- Fig. 8: shows the cross-section along C-C of Fig. 4; and
- Figs. 9 and 10: show corresponding cross-sections along A-A and C-C, respectively, of a second embodiment of the sealing arrangement according to the present invention.

### Detailed Description of Preferred Embodiments

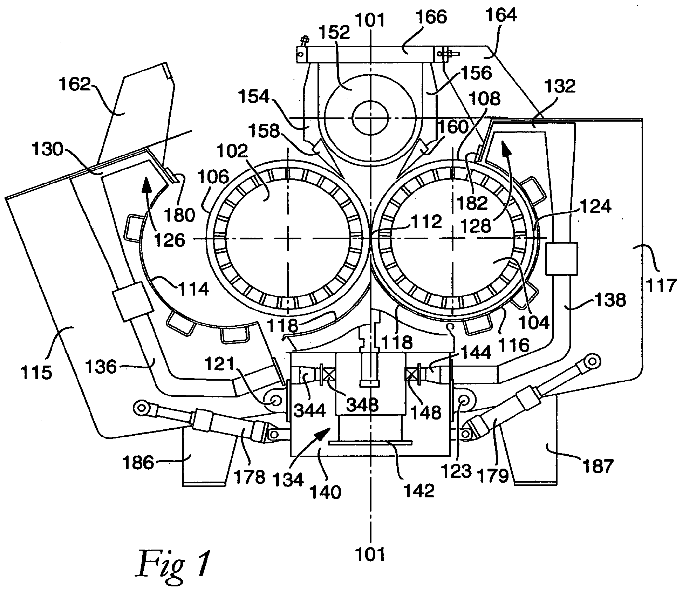

Fig. 1 shows an embodiment of the apparatus for washing and dewatering cellulose-containing pulp according to the present invention. The apparatus has a substantially symmetric configuration with regard to a symmetry plane 101, and in Fig. 1, the left side of the apparatus, i.e. to the left of the symmetry plane 101, illustrates the apparatus in an opened position, whereas the right side of the apparatus, i.e. to the right of the symmetry plane 101, illustrates the apparatus in a closed and operating position. The apparatus comprises a first rotatable press roll 102 on the left side of the apparatus and a second rotatable press roll 104 on the right side of the apparatus, each press roll 102, 104 having a perrneable outer surface 106, 108. The press rolls 102, 104 comprise a number of filtrate channels 110 radially inwards of the outer surface 106, 108 to lead evacuated filtrate away. The two press rolls defines a press nip 112 between them, in which press nip the pulp is pressed, and are arranged to rotate in opposite directions, the left press roll 102 being arranged to rotate in counter clockwise direction and the right press roll 104 being arranged to rotate in clockwise direction. The apparatus is arranged to feed the pulp through the press nip 112 in a substantially vertical direction from below upwards, however, the pulp can be fed through the press nip 112 in other directions.

The apparatus comprises a casing which includes a vat 114, 116, 118, in which the press rolls 102, 104 are installed, the vat 114, 116, 118 partly enclosing the outer surface 106, 108 of each press roll 102, 104, whereby a gap 124 for each press roll 102, 104 is defined, limited by the vat 114, 116, 118 and the outer surface 106, 108 of the respective press roll 102, 104. The vat 114, 116, 118 is built up of a first side vat segment 114 which partly encloses the outer surface 106 of the first press roll 102, a second side vat segment 116 which partly encloses the outer surface 108 of the second press roll 104, and a central vat segment 118 partly enclosing the outer surface 106, 108 of the press roils 102, 104 between the press nip 112 and the side vat segments 114, 110. The central vat segment 118 is movable in a substantially vertical direction for providing additional accessibility to the region in proximity to the press nip 112. In Fig. 1, on the left side of the apparatus, the central vat segment 118 is shown in an inoperative opened position, whereas on the right side of the apparatus, the central vat segment 118 is shown in an operative closed position.

As mentioned above, a gap 124 is formed between the vat 114, 116, 118 and the outer surface 106, 108 of the press rolls 102, 104. In Fig. 1, only the right side of the apparatus illustrated the apparatus in a closed and operating position, and thus, only the gap 124 with regard to the second press roll 104 and the vat 116, 118 is shown, whereas the gap with regard to the first press roll 102 and the vat 114, 118 is not present in Fig. 1. However, when the left side of the apparatus is in a corresponding closed and operating position, a corresponding gap is provided between the first press roll 102 and the vat 114, 118.

Said casing comprises a first side casing member 115 which extends between the ends of the first press roll 102 and to which the first side vat segment 114 is mounted, and a second side casing member 117 which extends between the ends of the second press roll 104 and to which the second side vat segment 116 is mounted. The side casing members 115, 117, together with their side vat segments 114, 116, are pivotable about an axle 121, 123 forming a rotation axis 121, 123, and movable between a closed position and an opened position for providing access to the press rolls 102, 104. In Fig. 1, on the left side of the apparatus, the first side casing member 115 is in the opened position, whereby access to the press roll 102 is provided, whereas on the right side of the apparatus, the second side casing member 117 is in the closed position.

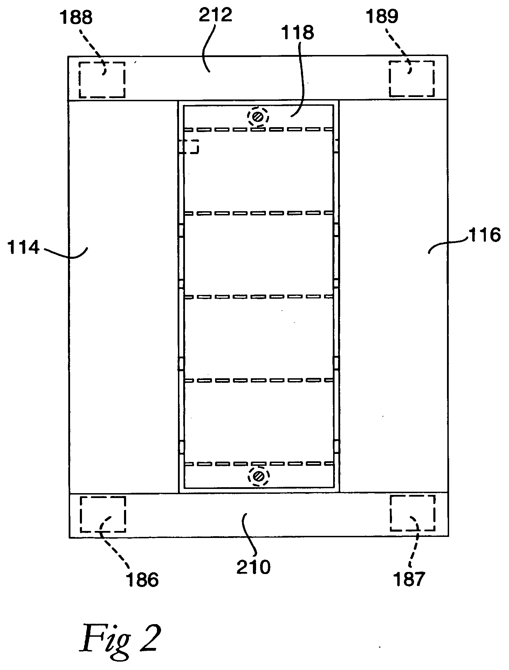

Further, the casing includes a central casing member 140, in the form of a stationary base unit 140 positioned substantially below the first and second press rolls 102, 104, a stationary first end casing member 210 in the form of a first gable, and a stationary second end casing member 212 in the form of a second gable (the end casing members 210, 212 being shown in Fig. 2). The press rolls 102, 104 are pivotally mounted to the end casing members 210, 212, and the central casing member 140 is mounted to the end casing members 210, 212. Each side casing member 115, 117 is pivotally attached to the central casing member 140, and each side casing member 115, 117 is also connected to the central casing member 140 via a respective hydraulic cylinder 178, 179 for controlling the movement of the respective side casing member 115, 117. The central vat segment 118 is mounted to the central casing member 140.

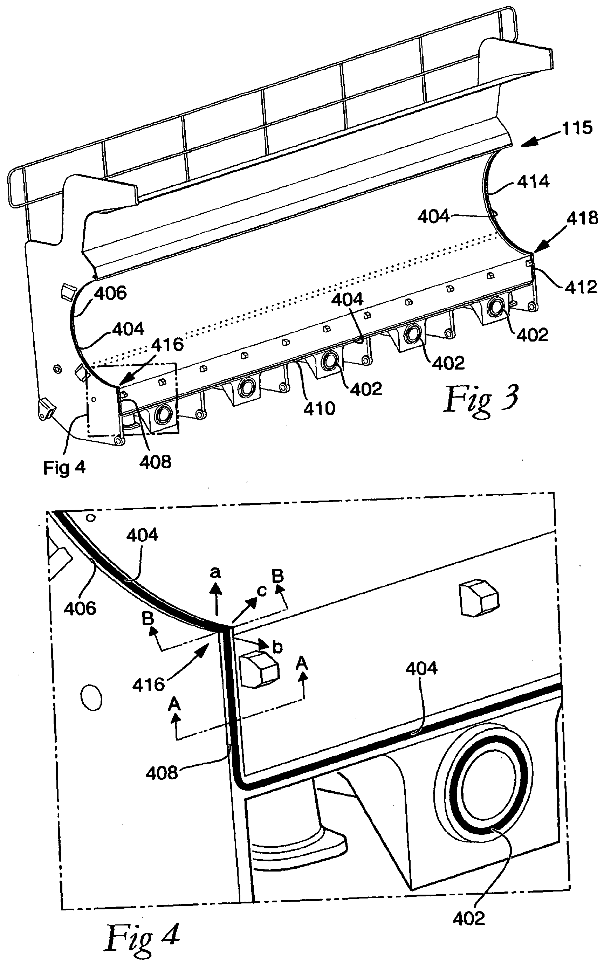

Sealing arrangements are provided between each movable side casing member 115, 117 and the central casing member 140, and between each movable side casing member 115, 117 and the end casing members 210, 212. The sealing arrangement is described in more detail in connection to Figs. 3-10. Further, a sealing member 180, 182 is mounted to each side casing member 115, 117, which sealing member 180, 182 extends along to the longitudinal extension of the press roll 102, 104 and is adapted to abut the outer surface 106, 108 of the press roll 102, 104 when the side casing member 115, 117 is in its closed position. As the sealing arrangements, the sealing members 180, 182 are adapted to seal off the gap 124 from the eternal surroundings, i.e. the atmosphere, at the position where the pulp is distributed to the gap 124. The sealing member 180, 182 is in the form of a scraper. Thus, by way of the above-mentioned sealing arrangements and sealing members 180, 182, the gap 124 and the surfaces defining the gap are sealed off from the atmosphere.

The apparatus comprises a first pulp distribution device 126 for distributing pulp on the first press roll 102 and a second pulp distribution device 128 for distributing pulp on the second press roll 104. The pulp distribution devices 126, 128 are arranged to distribute pulp to the gap 124 along the whole length of each press roll 102, 104. The pulp distributed on the outer surface 106, 108 of the press roll 102, 104 forms a mat on the press rolls 102, 104. From the pulp distribution devices 126, 128 to the press nip 112, the pulp is fed in the gap 124 in the direction of rotation of the press rolls 102, 104 while being pressed, or pressed and washed.

Fig. 2 shows the central vat segment 118 of Fig. 1 installed in the apparatus as viewed from above with the press rolls excluded. The apparatus rests on the ground via four legs 186, 187, 188, 189 (only two legs are shown in Fig. 1). In Fig. 2, the end casing members 210, 212 of the casing are shown.

Further, the apparatus is provided with an inlet device 134 for receiving pulp to the apparatus, and several flow channels 136, 138 for transporting pulp from the inlet device 134 to the pulp distribution devices 126, 128, which flow channels 136, 138 are mounted to and integrated with the side casing members 115, 117. The inlet device 134 is housed in the central casing member 140. The inlet device includes an inlet 142 for connection to an external pulp supply, and an outlet 144, 344 for each flow channel 136, 138 which outlet 144, 344 is located in central casing member 140 and is connectable to its flow channel 136, 138 when the side casing member 115, 117 is in a closed position. The apparatus has annular sealing elements 402 for sealing the passage, from the outlet 144, 344 to the flow channel 136,138, between the outlet 144, 344 and the flow channel 136, 138 (see Fig. 4).

The apparatus also includes a pulp transport screw 152, which for example can be in the form of a pulp disintegrating screw or a shredder screw, towards which the pulp which has been pressed in the press nip 112 is conveyed. The pulp transport screw 152 extends parallelly to the longitudinal axis of one of the press rolls 102, 104, and is arranged to disintegrate the pulp and transport the pulp axially away from the press for further processing. Each press roll 102, 104 is provided with a respective doctor bar 154, 156, and each doctor bar 154, 156 is provided at the bottom thereof with a respective doctor blade 158, 160 for scraping the outer surface 106, 108 of the respective press roll 102, 104.

The apparatus comprises two sets of arms 162, 164 (only one set shown in Fig. 1). Each set comprising a first arm 162 and a second arm 164, where the first side casing member 115 is provided with the first arm 162 and the second side casing member 117 is provided with the second arm 164. During operation, each arm 162, 164 is locked to a stationary central member 166 of the apparatus, which central member 166 is positioned above the press rolls 102, 104.

Fig. 3 shows an embodiment of the apparatus member according to the present invention in the form of the first side casing member 115 of Fig. 1, which is provided with the sealing arrangement 404 according to the present invention. The surfaces 406, 408, 410, 412, 414 of the first side casing member 115 to be sealed against opposite surfaces are peripheral surfaces of the first side casing member 115, and the inflatable sealing arrangement 404 extends along the entire extension of the peripheral surfaces 406, 408, 410, 412, 414. The surfaces 406, 408, 410, 412, 414 of the first side casing member 115 to be sealed against opposite surfaces includes two right angle outer corners 416, 418 each including a first surface 406, 414 and a second surface 408, 412 which form the respective outer corner 416, 418.

With reference to Fig. 4, an enlargement of the first outer corner 416 of the first side casing member 115 shown in Fig. 3 is shown, where the first surface 406 and a second surface 408 forming said outer corner 416 is shown more clearly.

A first embodiment of the sealing arrangement 404 will now be disclosed in more detailed with reference to Figs. 4 to 8.

The sealing arrangement 404 is adapted to seal between surfaces 406, 408, 410, 412, 414 provided on the first side casing member 115, which surfaces comprise the first surface 406 and the second surface 408 forming an outer corner 416, and surfaces opposite said surfaces 406, 408, 410, 412, 414 of the first side casing member 115. The surfaces 406 and 414 are adapted to be sealed against opposite surfaces provided on the end casing members 210, 212 of the apparatus, and the surfaces 408, 410 and 412 are adapted to be seated against opposite surfaces provided on the central casing member 140 of the apparatus. The sealing arrangement 404 includes an elongated first member 502, an elongated second member 504 and a junction region 506 where the two members 502, 504 join.

Each member 502, 504 has elongated elastic walls including a bottom wall 508, 510, a top wall 512, 514 opposite the bottom wall 508, 510, and two side walls 516, 518 which together with the bottom wall 510 and the top wall 514 define a space 520-a, 520-b, 520-c of the member 504 which is inflatable by a fluid, e.g. pressurized air, and has a cross-section area. The bottom wall 508 of the first member 502 is adapted to rest against said first surface 406, and the bottom wall 510 of the second member 504 is adapted to rest against said second surface 408. The elastic walls are made of an elastic polymeric material.

Each member 502, 504 defines a longitudinal central axis *x-x, y-y,* where the central axis *x-x* of the first member 502 forms an angle a with the central axis *y-y* of the second member 504, which angle is substantially 90 degrees. In other embodiments, the angle a can also be smaller or bigger than 90 degrees.

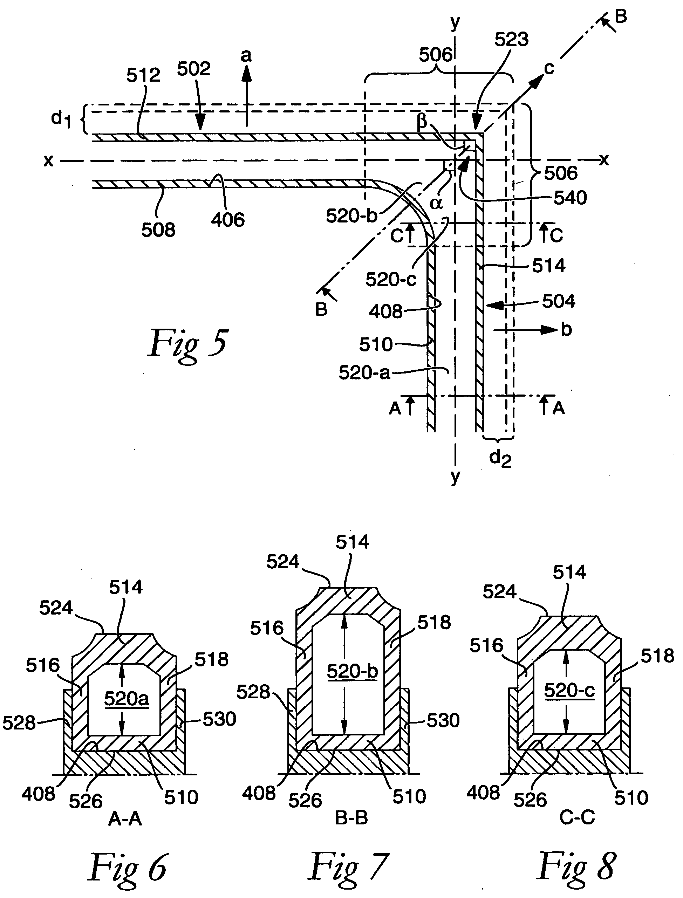

When the space 520-a, 520-b, 520-c of each member 502, 504 is inflated, the top wall 512 of the first member 502 is adapted to move outwardly, from a resting position to a sealing position, in a first expansion direction a transverse to the central axis *x-x* of the first member 502 and to the plane of the top wall 512 of the first member 502, in order to seal against a first opposite surface, and the top wall 514 of the second member 504 is adapted to move outwardly, from a resting position to a sealing position, in a second expansion direction *b* transverse to the central axis *y*-*y* of the second member 504 and to the plane of the top wall 514 of the second member 504, in order to seal against a second opposite surface. In Fig. 5, the top wall 512, 514 of each member 502, 504 is in its resting position. The sealing position of each member 502, 504 is illustrated by dashed lines in Fig. 5.

The top wall 512 of the first member 502 forms an angle ß with the top wall 514 of the second member 504 in the junction region 506, which angle β is substantially 90 degrees, whereby a substantially right angle corner 523 is formed by the top walls 512, 514 of the members 502, 504 of the sealing arrangement 404. In other embodiments, the angel ß can also be smaller or bigger than 90 degrees. The junction region 506 is designed in such a way that when the space 520-a, 520-b, 520-c of the member is inflated, the top wall 514 of the member 504 is adapted to move the same distance from the resting position to the sealing position along the entire longitudinal extension of the member 504. As indicated in Fig. 5, the top wall 512 of the first member 502 is adapted to move a distance *d₁* in the first expansion direction a from the resting position to the sealing position, and the top wall 514 of the second member 504 is adapted to move a distance *d₂* in the second expansion direction *b* from the resting position to the sealing position. Advantageously, the distance *d₁* is equal to the distance *d₂*, but they can also differ from each other.

The bottom walls 508, 510 of the two members 502, 504 form a smoothly curved wall in the junction region 506. The area of the outer surface 524 of the top wall 514 of the member 504 is reduced in relation to the area of the outer surface 526 of the opposite bottom wall 510.

With reference to Figs. 6 to 8, the first embodiment of the sealing arrangement according to the present invention will now be described in further more detail, where Fig. 6 shows a cross-section of the second member 504 along A-A of Fig. 4, which is outside the junction region 506, Fig. 7 shows a cross-section along B-B of Fig. 4, which is within the junction region 506 and includes the outer corner 523 formed by the top walls 512, 514 of the two members 502, 504, and Fig. 8 shows a cross-section along C-C of Fig. 4 which is also within the junction region 506. As is shown in Figs. 6-8, the surfaces 408 of the first side casing member 115 to be sealed against opposite surfaces are provided with a groove having a bottom surface 408, which includes said first and second surfaces 408 and inner side walls 528, 530. The groove is adapted to hold the first and second members 504.

As illustrated by Figs. 6 and 8, in the junction region 506, the walls 510. 514, 516, 518 of each member 504 define a space 520-c which has an increased cross-section area perpendicular to the respective central axis *y-y* in relation to the space 520-a of each member 504 outside the junction region 506, and in the junction region 506, a space 520-c is defined, the cross-section of which is increased in the respective expansion direction *b* in relation to the space 520-a of each member 504 outside the junction region 506.

The cross-section area is largest in section B-B, where the cross-section area is substantially larger than the cross-section area outside the junction region 506. From section B-B, the cross-section area decreases continuously in the direction towards the border between the junction region 506 and the region outside the junction region 506. The same applies in principle for the cross-section in the respective expansion direction *b*.

By providing the above-mentioned differences in the cross-section of the space 520-a, 520-b, 520-c the side walls 516, 518 are substantially longer in section B-B and longer in section CC than in section A-A, whereby upon inflation, the outer corner 523 of the seal is allowed to move a longer distance in the diagonal direction *c* from the resting position to the sealing position in relation to the distances *d₁*, *d₂* between the resting position and the sealing position of respective top wall 512. 514 in respective expansion direction *a*, *b*. This provides for that upon inflation, the outer corner 523 of the seal moves the same distances *d₁* in the first expansion direction *a* as the rest of the top wall 512 of the first member 502, and the same distance *d₂* in the second expansion direction *b* as the rest of the top wall 514 of the second member 504. The result of this is that an efficient seal between the top walls 510, 512 and the opposite surfaces, against which the top walls 510, 512 are sealing, is also provided in the junction region 506, without any gap between the seal and the opposite surfaces.

The top walls 512, 514 of the members 502, 504 form an inner corner 540. From the inner corner 540, the junction region 506 extends a distance in the direction of the central axis *y*-*y* of the second member 504, which distance is longer than the distance between the top wall 512 and the bottom wall 508 of the first member 502 in the first expansion direction *a*. Further, from the inner corner 540, the junction region 506 extends a distance in the direction of the central axis *x-x* of the first member 502, which distance is longer than the distance between the top wall 514 and the bottom wall 510 of the second member 504 in the second expansion direction *b*.

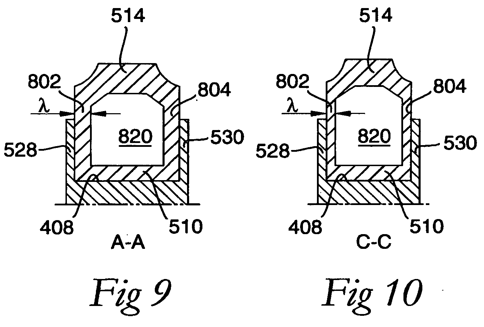

With reference to Figs. 9 and 10, a second embodiment of the sealing arrangement according to the present invention will now be described in more detail. The cross-section side view of the second embodiment corresponds to Fig. 5. Fig. 9 shows the cross-section along A-A of Fig. 4, which is outside the junction region 506, and Fig. 10 shows a cross-section along C-C of Fig. 5 of the second embodiment, which is within the junction region 506. As illustrated in Figs. 9 and 10, the thickness λ of the side walls 802, 804 in the junction region 506 is decreased in relation to the thickness λ of the side walls 802, 804 of each member 504 outside the junction region 506. The thickness λ of the side walls is smallest in a corresponding section B-B, where the side wall thickness λ is substantially smaller than the side wall thickness λ outside the junction region 506. From a corresponding section B-B, the side wall thickness λ increases continuously in the direction towards the border between the junction region 506 and the region outside the junction region 506.

By providing the above-mentioned differences in the thickness λ of the side walls 802, 804, where the side walls 802, 804 are substantially thinner in section B-B and thinner in section C-C than in section A-A, upon inflation, the side walls 802, 804 are allowed to stretch an even longer distance in the diagonal direction *c* in relation to the stretching distances *d₁, d₂* of the side walls 802, 804 outside the junction region 506. Hereby, in the second embodiment, the outer corner 523 of the seal is allowed to move an even longer distance in the diagonal direction *c* from the resting position to the sealing position in relation to the distances *d₁, d₂* between the resting position and the sealing position of respective top wall 512, 514 in respective expansion direction *a*, *b.* This also provides for that upon inflation, the outer corner 523 of the seal moves the same distances *d₁* in the first expansion direction a as the rest of the top wall 512 of the first member 502, and the same distance *d₂* in the second expansion direction *b* as the rest of the top wall 514 of the second member 504. It is also possible with an embodiment where there is only a difference in wall thickness between the junction region and the region outside the junction region, and where there is no essential difference in the cross-section in the respective expansion direction.

## Claims

1. A sealing arrangement (404) arranged for sealing between surfaces (406, 408, 410, 412, 414), which surfaces (406, 408, 410, 412, 414) comprise a first surface (406) and a second surface (408), which form an outer corner (416), and surfaces opposite said first and second surfaces (406, 408), the sealing arrangement (404) comprising an elongated first member (502), an elongated second member (504) and a junction region (506) where the two members (502, 504) join,
each member (502, 504) has elongated elastic walls comprising at least a bottom wall (508, 510) and a top wall (512, 514) opposite the bottom wall (508, 510), the walls defining a space (520-a, 520-b, 520-c; 820) which is inflatable by a fluid and has a cross-section area,
the bottom wall (508) of the first member (502) is adaptable to rest against said first surface (406), and the bottom wall (510) of the second member (504) is adaptable to rest against said second surface (408),
each member (502, 504) defines a longitudinal central axis (*x-x, y-y*), where the central axis (*x-x*) of the first member (502) forms an angle *(α)* with the central axis (*y-y*) of the second member (504),
when the space (520-a, 520-b, 520-c; 820) of each member (502, 504) is inflated, the top wall (512) of the first member (502) is adapted to move outwardly, from a resting position to a sealing position, in a first expansion direction (*a*) transverse to the central axis (*x-x*) of the first member (502) to seal against a first opposite surface, and the top wall (514) of the second member (504) is adapted to move outwardly, from a resting position to a sealing position, in a second expansion direction (*b*) transverse to the central axis (*y-y*) of the second member (504) to seal against a second opposite surface, wherein
the top wall (512) of the first member (502) forms an angle (β) with the top wall (514) of the second member (504) in the junction region (506), and in that
the junction region (506) is designed in such a way that when the space (520-a, 520-b, 520-c; 820) of the first and second member (502, 504) is inflated, the top wall (512, 514) of the first and second member (502, 504) is adapted to move the same distance (*d₁, d₂*) from the resting position to the sealing position along the entire longitudinal extension of the first and second member (502, 504), **characterized in that** in the junction region (506), the walls (508, 510, 512, 514, 516, 518) of each member (502, 504) define a space (520-c), the cross-section of which is increased in the respective expansion direction (b) in relation to the space (520-a) of each member (502, 504) outside the junction region (506).

2. A sealing arrangement according to claim 1, **characterized in that** in the junction region (506), the walls (508, 510, 512, 514, 516, 518) of each member (502, 504) define a space (520-c) which has an increased cross-section area perpendicular to the respective central axis (*y*-*y*) in relation to the space (520-a) of each member (502, 504) outside the junction region (506).

3. A sealing arrangement (404) according to claim 1 or 2, **characterized in that** the elastic walls of each member (502, 504) comprise two side walls (802, 804) which together with the bottom wall (508, 510) and the top wall (512, 514) define the space (820) of the member (502, 504), and **in that** the thickness (λ) of the side walls (802, 804) in the junction region (506) is decreased in relation to the side walls (802, 804) of each member (502, 504) outside the junction region (506).

4. A sealing arrangement according to any of the claims 1 to 3, **characterized in that** the central axis (*x-x*) of the first member (502) is transverse to the central axis (*y*-*y*) of the second member (504).

5. A sealing arrangement according to any of the claims 1 to 4, **characterized in that** the top wall (512) of the first member (502) forms a right angle (β) with the top wall (514) of the second member (504) in the junction region (506), whereby a right angle corner (523) is formed by the top walls (512,514).

6. A sealing arrangement according to any of the claims 1 to 5, **characterized in that** the bottom walls (508, 510) of the two members (502, 504) form a smoothly curved wall in the junction region (506).

7. A sealing arrangement according to any of the claims 1 to 6, **characterized in that** in the area of the outer surface (524) of the top wall (514) of the member (504) is reduced in relation to the area of the outer surface (526) of the opposite bottom wall (510).

8. A sealing arrangement according to any of the claims 1 to 7, **characterized in that** the elastic walls (508, 510, 512, 514; 516, 518; 802, 804) are made of an elastic polymeric material.

9. An apparatus member (115) provided with surfaces (406, 408, 410,412, 414) to be sealed against opposite surfaces, said surfaces (406, 408, 410, 412, 414) of the apparatus member (115) comprising at least a first surface (406) and a second surface (408) which form an outer corner (416), the apparatus member (115) comprises a sealing arrangement (404) for sealing between the surfaces (406, 408, 410, 412, 414) of the apparatus member (115) and the opposite surfaces, **characterized in that** the sealing arrangement (404) comprises the features mentioned in any of the claims 1 to 8.

10. An apparatus member (115) according to claim 9, **characterized in that** the surfaces (406, 408, 410, 412, 414) of the apparatus member (115) to be sealed against opposite surfaces are provided with a groove having a bottom surface (406, 408) which includes said first and second surfaces (406, 408), and **in that** the groove is adapted to hold the members (502, 504) of the sealing arrangement (404).

11. An apparatus member (115) according to claim 9 or 10, **characterized in that** the surfaces (406, 408, 410, 412, 414) of the apparatus member (115) to be sealed against opposite surfaces are peripheral surfaces of the apparatus member (115), and **in that** the sealing arrangement (404) extends along the entire extension of the peripheral surfaces.

12. An apparatus for washing and/or dewatering pulp comprising at least one rotatable press roll (102, 104) having a permeable outer surface (106, 108) and a casing comprising at least one side casing member (115, 117) and a vat (114, 116, 118) in which the press roll (102, 104) is installed, a gap (124) being formed between the vat (114, 116, 118) and the outer surface (106, 108) of the press roll (102, 104), the vat (114, 116, 118) comprising a side vat segment (114) which partly encloses the outer surface (106) of the press roll (102) and is provided on the side casing member (115), the side casing member (115) being pivotable about a rotation axis (121) and movable between a closed position and an opened position, the apparatus comprises two stationary end casing members (210, 212) between which the side casing member (115) is installed, the side casing member (115) is provided with peripheral surfaces (406, 408, 410, 412, 414) to be sealed against opposite surfaces in order to seal said gap (124), the peripheral surfaces (406, 408, 410, 412, 414) comprising at least a first surface (406) and a second surface (408) which form an outer corner (416), and the apparatus comprises a sealing arrangement (404) for sealing said gap (124), **characterized in that** the sealing arrangement (404) comprises the features mentioned in any of the claims 1 to 8.

13. An apparatus according to claim 12, **characterized in that** peripheral surfaces (406, 408, 410, 412, 414) are provided with a groove having a bottom surface (406, 408) which includes said first and second surfaces (406, 408), and **in that** the groove is adapted to hold the members (502, 504) of the sealing arrangement (404).

14. An apparatus according to claim 12 or 13, **characterized in that** the sealing arrangement (404) extends along the entire extension of the peripheral surfaces (406, 408, 410, 412, 414).

## Patentansprüche

1. Dichtungsanordnung (404), die zum Abdichten zwischen Oberflächen (406, 408, 410, 412, 414) ausgelegt ist, wobei die Oberflächen (406, 408, 410, 412, 414) eine erste Oberfläche (406) und eine zweite Oberfläche (408), die eine äußere Ecke (416) bilden, und Oberflächen umfassen, die der ersten und der zweiten Oberfläche (406, 408) gegenüberliegen, wobei die Dichtungsanordnung (404) ein längliches erstes Element (502), ein längliches zweites Element (504) und eine Verbindungsregion (506) umfasst, wo sich die zwei Elemente (502, 504) verbinden,
wobei jedes Element (502, 504) längliche elastische Wände aufweist, die mindestens eine untere Wand (508, 510) und eine obere Wand (512, 514) gegenüber der unteren Wand (508, 510) umfassen, wobei die Wände einen Raum (520-a, 520-b, 520-c; 820) definieren, der durch ein Fluid aufblasbar ist und einen Querschnittsbereich aufweist,
wobei die untere Wand (508) des ersten Elements (502) anpassbar ist, an der ersten Oberfläche (406) anzuliegen, und die untere Wand (510) des zweiten Elements (504) anpassbar ist, an der zweiten Oberfläche (408) anzuliegen,
wobei jedes Element (502, 504) eine zentrale Längsachse (x-x, y-y) definiert, wobei die zentrale Achse (x-x) des ersten Elements (502) einen Winkel (α) mit der zentralen Achse (y-y) des zweiten Elements (504) bildet,
wobei, wenn der Raum (520-a, 520-b, 520-c; 820) jedes Elements (502, 504) aufgeblasen wird, die obere Wand (512) des ersten Elements (502) ausgelegt ist, sich nach außen von einer Ruheposition in eine Abdichtposition in einer ersten Ausdehnungsrichtung (α) zu bewegen, die quer zu der zentralen Achse (x-x) des ersten Elements (502) verläuft, um gegen eine erste gegenüberliegende Oberfläche abzudichten, und die obere Wand (514) des zweiten Elements (504) ausgelegt ist, sich von einer Ruheposition in eine Abdichtposition in einer zweiten Ausdehnungsrichtung (b) zu bewegen, die quer zu der zentralen Achse (y-y) des zweiten Elements (504) verläuft, um gegen eine zweite gegenüberliegende Oberfläche abzudichten, wobei
die obere Wand (512) des ersten Elements (502) einen Winkel (β) mit der oberen Wand (514) des zweiten Elements (504) in der Verbindungsregion (506) bildet, und wobei
die Verbindungsregion (506) derart konzipiert ist, dass, wenn der Raum (520-a, 520-b, 520-c; 820) des ersten und des zweiten Elements (502, 504) aufgeblasen ist, die obere Wand (512, 514) des ersten und des zweiten Elements (502, 504) ausgelegt ist, sich um den gleichen Abstand (d₁, d₂) von der Ruheposition in die Abdichtposition entlang der gesamten Längsausdehnung des ersten und des zweiten Elements (502, 504) zu bewegen, **dadurch gekennzeichnet, dass** die Wände (508, 510, 512, 514, 516, 518) jedes Elements (502, 504) in der Verbindungsregion (506) einen Raum (520-c) definieren, dessen Querschnitt in der Ausdehnungsrichtung (b) in Bezug auf den Raum (520-a) jedes Elements (502, 504) außerhalb der Verbindungsregion (506) erhöht ist.

2. Dichtungsanordnung nach Anspruch 1, **dadurch gekennzeichnet, dass** die Wände (508, 510, 512, 514, 516, 518) jedes Elements (502, 504) in der Verbindungsregion (506) einen Raum (520-c) definieren, der einen erhöhten Querschnittsbereich aufweist, der senkrecht zu der jeweiligen zentralen Achse (y-y) in Bezug auf den Raum (520-a) jedes Elements (502, 504) außerhalb der Verbindungsregion (506) ist.

3. Dichtungsanordnung (404) nach Anspruch 1 oder 2, **dadurch gekennzeichnet, dass** die elastischen Wände jedes Elements (502, 504) zwei Seitenwände (802, 804) umfassen, die zusammen mit der unteren Wand (508, 510) und der oberen Wand (512, 514) den Raum (820) des Elements (502, 504) definieren, und dadurch, dass die Dicke (λ) der Seitenwände (802, 804) in der Verbindungsregion (506) in Bezug auf die Seitenwände (802, 804) jedes Elements (502, 504) außerhalb der Verbindungsregion (506) verringert ist.

4. Dichtungsanordnung nach einem der Ansprüche 1 bis 3, **dadurch gekennzeichnet, dass** die zentrale Achse (x-x) des ersten Elements (502) quer zu der zentralen Achse (y-y) des zweiten Elements (504) verläuft.

5. Dichtungsanordnung nach einem der Ansprüche 1 bis 4, **dadurch gekennzeichnet, dass** die obere Wand (512) des ersten Elements (502) einen rechten Winkel (β) mit der oberen Wand (514) des zweiten Elements (504) in der Verbindungsregion (506) bildet, wodurch eine rechtwinklige Ecke (523) von den oberen Wänden (512, 514) gebildet wird.

6. Dichtungsanordnung nach einem der Ansprüche 1 bis 5, **dadurch gekennzeichnet, dass** die unteren Wände (508, 510) der zwei Elemente (502, 504) eine leicht gekrümmte Wand in der Verbindungsregion (506) bilden.

7. Dichtungsanordnung nach einem der Ansprüche 1 bis 6, **dadurch gekennzeichnet, dass** der Bereich der äußeren Oberfläche (524) der oberen Wand (514) des Elements (504) in Bezug auf den Bereich der äußeren Oberfläche (526) der gegenüberliegenden unteren Wand (510) reduziert ist.

8. Dichtungsanordnung nach einem der Ansprüche 1 bis 7, **dadurch gekennzeichnet, dass** die elastischen Wände (508, 510, 512, 514; 516, 518; 802, 804) aus einem elastischen Polymermaterial gefertigt sind.

9. Vorrichtungselement (115), das mit Oberflächen (406, 408, 410, 412, 414) versehen ist, die gegen gegenüberliegende Oberflächen abgedichtet werden sollen, wobei die Oberflächen (406, 408, 410, 412, 414) des Vorrichtungselements (115) mindestens eine erste Oberfläche (406) und eine zweite Oberfläche (408) umfassen, die eine äußere Ecke (416) bilden, wobei das Vorrichtungselement (115) eine Dichtungsanordnung (404) zum Abdichten zwischen den Oberflächen (406, 408, 410, 412, 414) des Vorrichtungselements (115) und den gegenüberliegenden Oberflächen umfasst, **dadurch gekennzeichnet, dass** die Dichtungsanordnung (404) die Merkmale nach einem der Ansprüche 1 bis 8 umfasst.

10. Vorrichtungselement (115) nach Anspruch 9, **dadurch gekennzeichnet, dass** die Oberflächen (406, 408, 410, 412, 414) des Vorrichtungselements (115), die gegen gegenüberliegende Oberflächen abgedichtet werden sollen, mit einer Rille versehen sind, die eine untere Oberfläche (406, 408) hat, die die erste und die zweite Oberfläche (406, 408) aufweist, und dadurch, dass die Rille ausgelegt ist, die Elemente (502, 504) der Dichtungsanordnung (404) zu halten.

11. Vorrichtungselement (115) nach Anspruch 9 oder 10, **dadurch gekennzeichnet, dass** die Oberflächen (406, 408, 410, 412, 414) des Vorrichtungselements (115), gegen die gegenüberliegende Oberflächen abgedichtet werden sollen, Umfangsoberflächen des Vorrichtungselements (115) sind, und dadurch, dass die Dichtungsanordnung (404) entlang der gesamten Ausdehnung der Umfangsoberflächen erstreckt.

12. Vorrichtung zum Waschen und/oder Entwässern von Zellstoff, umfassend mindestens eine drehbare Presswalze (102, 104), die eine permeable äußere Oberfläche (106, 108) und ein Gehäuse aufweist, das mindestens ein Seitengehäuseelement (115, 117) und eine Wanne (114, 116, 118) umfasst, in der die Presswalze (102, 104) installiert ist, wobei ein Spalt (124) zwischen der Wanne (114, 116, 118) und der äußeren Oberfläche (106, 108) der Presswalze (102, 104) ausgebildet ist, wobei die Wanne (114, 116, 118) ein Seitenwannensegment (114) umfasst, das die äußere Oberfläche (106) der Presswalze (102) teilweise einschließt und auf dem Seitengehäuseelement (115) bereitgestellt ist, wobei das Seitengehäuseelement (115) um eine Drehachse (121) schwenkbar und zwischen einer geschlossenen Position und einer geöffneten Position beweglich ist, wobei die Vorrichtung zwei ortsfeste Endgehäuseelemente (210, 212) umfasst, zwischen denen das Seitengehäuseelement (115) installiert ist, wobei das Seitengehäuseelement (115) mit Umfangsoberflächen (406, 408, 410, 412, 414) versehen ist, die gegen gegenüberliegende Oberflächen abgedichtet werden sollen, um den Spalt (124) abzudichten, wobei die Umfangsoberflächen (406, 408, 410, 412, 414) mindesten seine erste Oberfläche (406) und eine zweite Oberfläche (408) umfassen, die eine äußere Ecke (416) bilden, und wobei die Vorrichtung eine Dichtungsanordnung (404) zum Abdichten des Spalts (124) umfasst, **dadurch gekennzeichnet, dass** die Dichtungsanordnung (404) die Merkmale nach einem der Ansprüche 1 bis 8 umfasst.

13. Vorrichtung nach Anspruch 12, **dadurch gekennzeichnet, dass** die Umfangsoberflächen (406, 408, 410, 412, 414) mit einer Rille versehen sind, die eine untere Oberfläche (406, 408) hat, die die erste und die zweite Oberfläche (406, 408) aufweist, und dadurch, dass die Rille ausgelegt ist, die Elemente (502, 504) der Dichtungsanordnung (404) zu halten.

14. Vorrichtung nach Anspruch 12 oder 13, **dadurch gekennzeichnet, dass** sich die Dichtungsanordnung (404) entlang der gesamten Ausdehnung der Umfangsoberflächen (406, 408, 410, 412, 414) erstreckt.

## Revendications

1. Agencement d'étanchéité (404) agencé pour assurer une étanchéité entre des surfaces (406, 408, 410, 412, 414), lesquelles surfaces (406, 408, 410, 412, 414) comprennent une première surface (406) et une seconde surface (408), qui forment un coin externe (416), et des surfaces opposées audites première et seconde surfaces (406, 408), l'agencement d'étanchéité (404) comprenant un premier organe allongé (502), un second organe allongé (504) et une région de jonction (506) où les deux organes (502, 504) se joignent ;
chaque organe (502, 504) a des parois élastiques allongées comprenant au moins une paroi basse (508, 510) et une paroi haute (512, 514) opposée à la paroi basse (508, 510), les parois définissant un espace (520-a, 520-b, 520-c ; 820) qui est gonflable grâce à un fluide et a une aire en coupe,
la paroi basse (508) du premier organe (502) est adaptable pour appuyer contre ladite première surface (406), et la paroi basse (510) du second organe (504) est adaptable pour appuyer contre ladite seconde surface (408),
chaque organe (502, 504) définit un axe central longitudinal (*x-x*, *y*-*y*), où l'axe central (*x-x*) du premier organe (502) forme un angle (α) avec l'axe central (*y*-*y*) du second organe (504),
lorsque l'espace (520-a, 520-b, 520-c ; 820) de chaque organe (502, 504) est gonflé, la paroi haute (512) du premier organe (502) est adaptée pour se déplacer vers l'extérieur, d'une position d'appui à une position d'étanchéité, dans une première direction de dilatation (a) transversale à l'axe central (x-x) du premier organe (502) pour assurer une étanchéité contre une première surface opposée, et la paroi haute (514) du second organe (504) est adaptée pour se déplacer vers l'extérieur, d'une position d'appui à une position d'étanchéité, dans une seconde direction de dilatation (b) transversale à l'axe central (*y-y*) du second organe (504) pour assurer une étanchéité contre une seconde surface opposée, dans lequel
la paroi haute (512) du premier organe (502) forme un angle (β) avec la paroi haute (514) du second organe (504) dans la région de jonction (506), et
la région de jonction (506) est conçue de manière à ce que, lorsque l'espace (520-a, 520-b, 520-c ; 820) du premier et du second organe (502, 504) est gonflé, la paroi haute (512, 514) du premier et du second organe (502, 504) est adaptée pour se déplacer sur la même distance (*d1*, *d2*) de la position d'appui à la position d'étanchéité sur la totalité de l'extension longitudinale du premier et du second organe (502, 504), **caractérisé en ce que** dans la région de jonction (506), les parois (508, 510, 512, 514, 516, 518) de chaque organe (502, 504) définissent un espace (520-c), dont la section est augmentée dans la direction de dilatation (b) respective par rapport à l'espace (520-a) de chaque organe (502, 504) en dehors de la région de jonction (506).

2. Agencement d'étanchéité selon la revendication 1, **caractérisé en ce que** dans la région de jonction (506), les parois (508, 510, 512, 514, 516, 518) de chaque organe (502, 504) définissent un espace (520-c) qui a une aire en coupe augmentée perpendiculaire à l'axe central (*y-y*) respectif par rapport à l'espace (520-a) de chaque organe (502, 504) en dehors de la région de jonction (506).

3. Agencement d'étanchéité (404) selon la revendication 1 ou 2, **caractérisé en ce que** les parois élastiques de chaque organe (502, 504) comprennent deux parois latérales (802, 804) qui, conjointement à la paroi basse (508, 510) et à la paroi haute (512, 514), définissent l'espace (820) de l'organe (502, 504), et **en ce que** l'épaisseur (λ) des parois latérales (802, 804) dans la région de jonction (506) diminue par rapport aux parois latérales (802, 804) de chaque organe (502, 504) en dehors de la région de jonction (506).

4. Agencement d'étanchéité selon l'une quelconque des revendications 1 à 3, **caractérisé en ce que** l'axe central (*x-x*) du premier organe (502) est transversal à l'axe central (*y-y*) du second organe (504).

5. Agencement d'étanchéité selon l'une quelconque des revendications 1 à 4, **caractérisé en ce que** la paroi haute (512) du premier organe (502) forme un angle droit (β) avec la paroi haute (514) du second organe (504) dans la région de jonction (506), moyennant quoi un coin à angle droit (523) est formé par les parois hautes (512, 514).

6. Agencement d'étanchéité selon l'une quelconque des revendications 1 à 5, **caractérisé en ce que** les parois basses (508, 510) des deux organes (502, 504) forment une paroi à courbure régulière dans la région de jonction (506).

7. Agencement d'étanchéité selon l'une quelconque des revendications 1 à 6, **caractérisé en ce que** l'aire de la surface externe (524) de la paroi haute (514) de l'organe (504) est réduite par rapport à l'aire de la surface externe (526) de la paroi basse (510) opposée.

8. Agencement d'étanchéité selon l'une quelconque des revendications 1 à 7, **caractérisé en ce que** les parois élastiques (508, 510, 512, 514 ; 516, 518 ; 802, 804) sont réalisées en un matériau polymérique élastique.

9. Organe d'appareil (115) pourvu de surfaces (406, 408, 410, 412, 414) dont l'étanchéité contre des surfaces opposées doit être assurée, lesdites surfaces (406, 408, 410, 412, 414) de l'organe d'appareil (115) comprenant au moins une première surface (406) et une seconde surface (408) qui forment un coin externe (416), l'organe d'appareil (115) comprend un agencement d'étanchéité (404) pour assurer une étanchéité entre les surfaces (406, 408, 410, 412, 414) de l'organe d'appareil (115) et les surfaces opposées, **caractérisé en ce que** l'agencement d'étanchéité (404) comprend les éléments mentionnés à l'une quelconque des revendications 1 à 8.

10. Organe d'appareil (115) selon la revendication 9, **caractérisé en ce que** les surfaces (406, 408, 410, 412, 414) de l'organe d'appareil (115) dont l'étanchéité contre des surfaces opposées doit être assurée sont pourvues d'une gorge ayant une surface basse (406, 408) qui comporte lesdites première et seconde surfaces (406, 408), et **en ce que** la gorge est adaptée pour contenir les organes (502, 504) de l'agencement d'étanchéité (404).

11. Organe d'appareil (115) selon la revendication 9 ou 10, **caractérisé en ce que** les surfaces (406, 408, 410, 412, 414) de l'organe d'appareil (115) dont l'étanchéité contre des surfaces opposées doit être assurée sont des surfaces périphériques de l'organe d'appareil (115), et **en ce que** l'agencement d'étanchéité (404) s'étend sur la totalité de l'extension des surfaces périphériques.

12. Appareil de lavage et/ou d'égouttage de pâte comprenant au moins un rouleau de presse rotatif (102, 104) ayant une surface externe perméable (106, 108) et un carter comprenant au moins un organe de carter latéral (115, 117) et une cuve (114, 116, 118) dans laquelle le rouleau de presse (102, 104) est installé, un écartement (124) étant formé entre la cuve (114, 116, 118) et la surface externe (106, 108) du rouleau de presse (102, 104), la cuve (114, 116, 118) comprenant un segment de cuve latéral (114) qui renferme en partie la surface externe (106) du rouleau de presse (102) et est prévu sur l'organe de carter latéral (115), l'organe de carter latéral (115) pouvant pivoter autour d'un axe de rotation (121) et étant mobile entre une position fermée et une position ouverte, l'appareil comprenant deux organes de carter à extrémité fixe (210, 212) entre lesquels l'organe de carter latéral (115) est installé, l'organe de carter latéral (115) étant pourvu de surfaces périphériques (406, 408, 410, 412, 414) dont l'étanchéité contre des surfaces opposées doit être assurée afin d'assurer l'étanchéité dudit écartement (124), les surfaces périphériques (406, 408, 410, 412, 414) comprenant au moins une première surface (406) et une seconde surface (408) qui forment un coin externe (416), et l'appareil comprend un agencement d'étanchéité (404) pour assurer l'étanchéité dudit écartement (124), **caractérisé en ce que** l'agencement d'étanchéité (404) comprend les éléments mentionnés à l'une quelconque des revendications 1 à 8.

13. Appareil selon la revendication 12, **caractérisé en ce que** des surfaces périphériques (406, 408, 410, 412, 414) sont pourvues d'une gorge ayant une surface basse (406, 408) qui comporte lesdites première et seconde surfaces (406, 408), et **en ce que** la gorge est adaptée pour contenir les organes (502, 504) de l'agencement d'étanchéité (404).

14. Appareil selon la revendication 12 ou 13, **caractérisé en ce que** l'agencement d'étanchéité (404) s'étend sur la totalité de l'extension des surfaces périphériques (406, 408, 410, 412, 414).
